# EUROPÄISCHE PATENTSCHRIFT

(11) **EP 2 436 748 B1**
(45) Veröffentlichungstag und Bekanntmachung des Hinweises auf die Patenterteilung: **05.06.2013**
(21) Anmeldenummer: 11183222.6
(22) Anmeldetag: 29.09.2011
(51) Int. Cl.: C09K 8/592

(54) **Verfahren zur Förderung von Erdöl aus unterirdischen Erdöllagerstätten**
Method for producing crude oil from subterranean crude oil storage areas
Procédé de production du pétrole de stations de stockage de pétrole souterraines

(30) Priorität: 04.10.2010 EP 10186420
(43) Veröffentlichungstag der Anmeldung: 04.04.2012
(73) Patentinhaber: Wintershall Holding GmbH, 34119 Kassel (DE); Institute of Petroleum Chemistry of the Siberian Branch of the Russian Academy, Tomsk 634021 (RU)
(72) Erfinder: Stehle, Vladimir, 34123 Kassel (DE); Siemer, Konrad, 34128 Kassel (DE); Altunina, Liubov, 634021 Tomsk (RU); Kuvshinov, Vladimir A., 634021 Tomsk (RU); Kuvshinov, Ivan, 634021 Tomsk (RU)
(74) Vertreter: Poganiuch, Peter

(56) Entgegenhaltungen:
- EP-A1- 0 266 808
- US-A- 3 730 272
- L. K. ALTUNINAV. A. KUVSHINOV: "Oil & Gas Science and Technology", REV. IFP, Bd. 63, Nr. 1, 1. Januar 2008 (2008-01-01) , Seiten 37-48, XP002621431,
- DATABASE WPI Week 200880 Thomson Scientific, London, GB; AN 2008-N82170 XP002621432, -& RU 2 338 768 C1 (FUEL ENERGY STOCK CO) 20. November 2008 (2008-11-20)
- DATABASE WPI Week 199220 Thomson Scientific, London, GB; AN 1992-164734 XP002621433, -& SU 1 654 554 A1 (AS SIBE OIL CHEM INST) 7. Juni 1991 (1991-06-07)

## Beschreibung

Die vorliegende Erfindung betrifft ein Verfahren zur Förderung von Erdöl aus Erdöllagerstätten, bei dem man zur Erhöhung der Erdölausbeute hoch permeable Bereiche der Erdölformation durch separates Injizieren von mindestens zwei verschiedenen Formulierungen in die Lagerstätte blockiert, wobei sich die Formulierungen erst in der Lagerstätte miteinander vermischen und die Mischung unter dem Einfluss der Lagerstättentemperatur hochviskose Gele bildet. Das Verfahren kann insbesondere im Finalstadium der Lagerstättenentwicklung, bei Steigerung der Produktionsverwässerung und besonders nach dem Dampffluten der Lagerstätten eingesetzt werden.

In natürlichen Erdölvorkommen liegt Erdöl in Hohlräumen poröser Speichergesteine vor, welche zur Erdoberfläche hin von undurchlässigen Deckschichten abgeschlossen sind. Neben Erdöl, inklusive Anteilen von Erdgas, enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise solche mit einem Durchmesser von nur ca. 1 µm; die Formation kann daneben aber auch Bereiche mit Poren größeren Durchmessers und/oder natürliche Brüche aufweisen.

Nach dem Niederbringen der Bohrung in die ölführenden Schichten fließt das Öl zunächst aufgrund des natürlichen Lagerstättendruckes zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden. Bei höher viskosen Erdölen ist eine eruptive Produktion in der Regel überhaupt nicht möglich.

Um die Ausbeute zu steigern, werden daher die so genannten sekundären Förderverfahren eingesetzt.

Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Förderbohrungen gedrückt. Durch Wasserfluten kann der Ausbeutungsgrad unter bestimmten Bedingungen wesentlich gesteigert werden.

Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereiche mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei schweren bzw. viskosen Erdölen besonders ausgeprägt. Je höher die Erdölviskosität, desto wahrscheinlicher ist die schnelle Verwässerung der Produktion.

Zur Förderung von Erdöl aus Lagerstätten mit hoher Erdölviskosität kann das Erdöl auch durch Einpressen von Heißdampf in die Lagerstätte erwärmt und so die Ölviskosität verringert werden. Wie beim Wasserfluten können aber auch Heißdampf und Dampfkondensat unerwünscht schnell durch hoch permeable Zonen von den Injektionsbohrungen zu den Produktionsbohrungen durchschlagen, und damit wird die Effizienz der tertiären Förderung reduziert.

Im Stand der Technik sind Maßnahmen bekannt, derartige hoch permeable Zonen zwischen Injektionsbohrungen und Produktionsbohrungen mittels geeigneter Maßnahmen zu schließen. Hierdurch werden hoch permeable Zonen mit geringem Fließwiderstand blockiert und das Flutwasser bzw. der Flutdampf durchströmen wieder die ölgesättigten, niedrig permeablen Schichten. Derartige Maßnahmen sind auch als so genannte "Conformance Control" bekannt. Einen Überblick über Maßnahmen zur "Conformance Control" geben Borling et al. "Pushing out the oil with Conformance Control" in Oilfield Review (1994), Seiten 44 ff..

Zur "Conformance Control" können vergleichsweise niedrig viskose Formulierungen bestimmter chemischer Stoffe eingesetzt werden, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische, organische oder polymere Komponenten. Die Viskositätssteigerung der eingepressten Formulierung kann einerseits einfach zeitverzögert auftreten. Es sind aber auch Formulierungen bekannt, bei denen die Viskositätssteigerung im Wesentlichen durch den Temperaturanstieg ausgelöst wird, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt.

SU 1 654 554 A1 offenbart ein Verfahren zum Ölgewinnen unter Verwendung von Mischungen aus Aluminiumchlorid oder Aluminiumnitrat, Harnstoff und Wasser, welche in die Erdölformation injiziert werden. Bei den erhöhten Temperaturen in der Formation hydrolysiert der Harnstoff zu Kohlendioxid und Ammoniak. Durch die Freisetzung der Base Ammoniak wird der pH-Wert des Wassers deutlich erhöht und es fällt ein hochviskoses Gel aus Aluminiumhydroxid aus, welches die hoch permeablen Zonen verstopft.

US 2008/0035344 A1 offenbart eine Mischung zum Blockieren unterirdischer Formationen mit verzögerter Gelierung, welche mindestens ein säurelösliches, vernetzbares Polymer, beispielsweise teilweise hydrolysiertes Polyacrylamid, ein teilweise neutralisiertes Aluminiumsalz, beispielsweise ein Aluminiumhydroxidchlorid sowie einen Aktivator umfasst, welcher unter Formationsbedingungen Basen freisetzen kann, wie beispielsweise Harnstoff, substituierte Harnstoffe oder Hexamethylentetramin. Die Mischung kann bevorzugt bei einer Temperatur von 0 bis 40°C eingesetzt werden und geliert bei Temperaturen oberhalb 50°C je nach Einsatzbedingungen innerhalb von 2 h bis 10 Tagen.

RU 2 339 803 C2 offenbart ein Verfahren zum Blockieren derartiger hoch permeabler Zonen, bei dem zunächst einmal das Volumen zur zu blockierenden, hoch permeablen Zonen bestimmt wird. Anschließend wird in einem ersten Verfahrensschritt eine wässrige Formulierung aus Carboxymethylcellulose und Chromacetat als Vernetzer in 15 Vol. %, bezogen auf das Gesamtvolumen der zu blockierenden Zone der Erdölformation injiziert. In einem zweiten Schritt wird eine wässrige Formulierung von Polyacrylamid und einem Vernetzer injiziert.

RU 2 361 074 offenbart ein Verfahren zum Blockieren hoch permeabler Zonen, bei dem Portionen von Formulierungen auf Basis von Harnstoff und Aluminiumsalzen in eine Lagerstätte mit hoher Lagerstättentemperatur verpresst werden.

L. K. Altunina und V. A. Kuvshinov in Oil & Gas Science and Technology - Rev. IFP, Vol. 63 (2008) (1), Seiten 37 bis 48 beschreiben verschiedene Thermogele und deren Verwendung zur Ölförderung, darunter Thermogele auf Basis von Harnstoff und Aluminiumsalzen sowie Thermogele auf Basis von Celluloseethern.

US 4,141,416 offenbart ein Verfahren zur tertiären Erdölförderung, bei dem eine wässrige alkalische Silikatlösung zur Absenkung der Wasser-Öl-Grenzflächenspannung in eine Erdölformation injiziert und hierdurch die Öl-Wasser-Grenzflächenspannung verringert wird. In einer Variante können gleichzeitig permeable Regionen der Erdölformation verschlossen werden, indem man in einem zweiten Schritt zusätzliche Komponenten wie beispielsweise Säuren injiziert, welche mit der alkalischen Silikat-Lösung Niederschläge bilden kann.

RU 2 338 768 C1 offenbart ein Verfahren zum Blockieren permeabler Zonen in Öllagerstätten, bei dem man eine Lösung enthaltend Natriumphosphat, Natriumoxalat, Natriumcarbonat und eine Mischung aus Carboxymethylcellulose und Xanthan sowie eine zweite Lösung enthaltend Calciumchlorid, Kupferchlorid und Aluminiumchlorid jeweils separat in die Erdölformation injiziert, wobei sich die beiden Formulierungen erst untertage mischen. Um ein vorzeitiges Vermischen zu vermeiden, kann zwischen den beiden Formulierungen noch eine Portion Wasser in die Erdölformation injiziert werden. Die Formulierungen bilden nach dem Vermischen Niederschläge aus schwerlöslichen Hydroxiden und schwerlöslichen Calciumsalzen. Die Schrift offenbart keine Kombination des Verfahrens mit Dampffluten. Sie offenbart auch nicht die Ausfällung in Abhängigkeit von der Temperatur. Vielmehr bilden sich die Ausfällungen ohne zeitliche Verzögerung beim Vermischen der beiden Lösungen. Auf diese Art und Weise ist es schwierig, weiter vom Injektor weg gelegene Stellen der Formation zu blockieren. Conformance Control im Zusammenhang mit Dampffluten bereitet jedoch eine Reihe besonderer Schwierigkeiten. Zum Dampffluten eingesetzter Dampf weist üblicherweise eine Temperatur von über 300°C auf. Dem entsprechend kann sich die Erdölformation am Ort der Injektionsbohrung auf über 300°C aufheizen. Zwar nimmt die Temperatur mit zunehmender Entfernung von der Injektionsbohrung ab, aber bei lang anhaltendem, permanenten Dampffluten fällt die Temperatur häufig erst mehrere hundert Meter von der Dampfinjektion entfernt wieder bis auf die natürliche Lagerstättentemperatur ab und auch die sehr heiße Zone um die Injektionsbohrung herum kann eine erhebliche Ausdehnung haben. Nach längerem Dampffluten kann sich in einem Radius von mehreren Metern um die Injektionsbohrung herum eine heiße Zone von 250°C bis 300°C bilden. Diese Zone kann einen Radius von bis zu 40 Metern aufweisen, wenn die Lagerstätte eine relativ homogene Permeabilität hat. Bei einer Lagerstätte, welche hochpermeable Kanäle aufweist, und der Dampf dementsprechend vorwiegend durch die hochpermeablen Kanäle fließt, dann sich die heiße Zone auch über noch größere Entfernungen erstrecken.

Zum einen sind viele Formulierungen gemäß Stand der Technik, insbesondere solche auf Basis von organischen Materialien bei den Temperaturen, welche nach dem Dampffluten in einer Erdölformation herrschen können, nicht mehr ausreichend stabil.

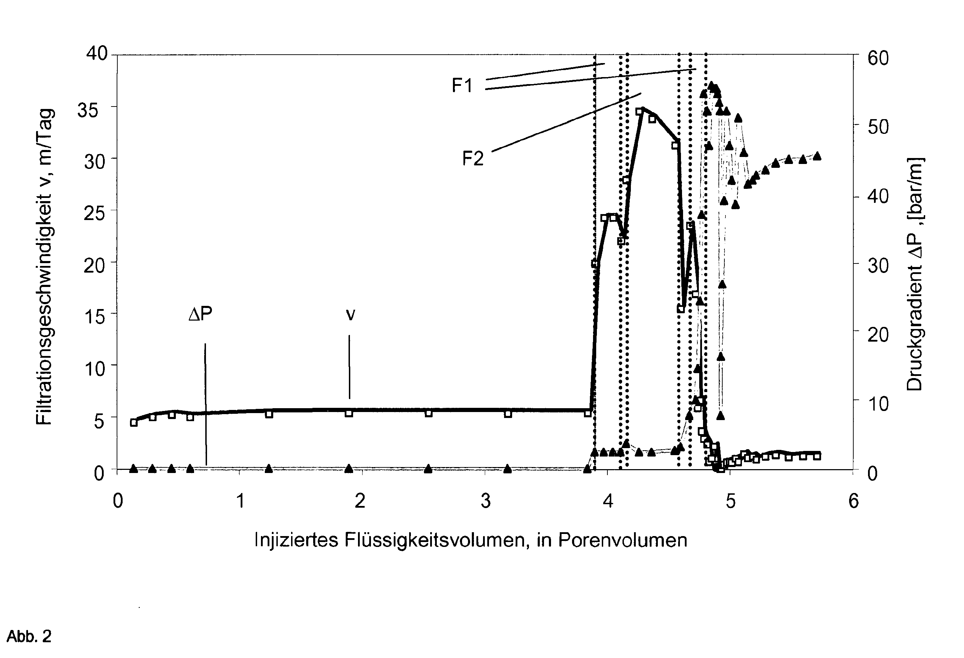

Die oben genannten, gelbildenden Formulierungen aus Aluminiumsalzen und Harnstoff weisen eine sehr gute Temperaturstabilität auf, sind also prinzipiell auch für Formationen nach dem Dampffluten geeignet. Allerdings tritt bei derartigen Formulierungen das Problem auf, dassdie Zeit, bis zu der die oben genannten, gelbildenden Formulierungen tatsächlich Gele bilden, außer von der Zusammensetzung und der Konzentration der Komponenten naturgemäß von der Temperatur abhängt, und zwar erfolgt die Gelbildung umso schneller, je höher die Temperatur ist. Während die Gelbildung bei Temperaturen von 50 bis 120°C Stunden, Tage oder gar Wochen benötigen kann, erfolgt die Gelbildung bei höheren Temperaturen naturgemäß deutlich schneller: L. K. Altunina und V. A. Kuvshinov präsentieren in Oil & Gas Science and Technology - Rev. IFP, Vol. 63 (2008) (1), Seiten 37 bis 48 , Figur 2, Seite 39 Messwerte für eine gelbildende Formulierung als Aluminiumsalzen und Harnstoff. Bei 150°C setzt die Gelbildung nach 40 min ein, bei 200°C nach 20 min und bei 250°C nach 10 min. Werden derartige Formulierungen in eine heiße Injektionsbohrung bzw. eine heiße Formation injiziert, besteht die Gefahr, dass die Gelbildung schon in der unmittelbaren Zone um die Injektionsbohrung herum einsetzt, da die Fließgeschwindigkeit der Formulierung in der Erdölformation meist so gering ist, so dass diese nach dem Injizieren sehr schnell aufgewärmt werden.

Somit erreichen die injizierten Formulierungen gar nicht die hoch permeablen Zonen, die sie eigentlich blockieren sollen, sondern viskose Gele werden schon an der Injektionsbohrung bzw. in der Bohrlochnahzone gebildet. Die Gele können das weitere Verpumpen der gelbildenden Formulierung behindern, und außerdem kann naturgemäß ein nachfolgendes Wasser- oder Dampffluten verhindert werden.

Die Probleme können zwar teilweise gelöst werden, indem man den Dampfinjektor nach dem Injizieren von Dampf etwas abkühlen lässt oder zum Abkühlen zusätzlich Wasser injiziert, aber eine solche Vorgehensweise kostet Zeit und garantiert nicht das einwandfreie Verpumpen der gelbildender Formulierungen in die Lagerstätte.

Aufgabe der Erfindung war es daher, ein Verfahren zur Förderung von Erdöl aus Erdölformationen mit sehr heißen Zonen bereitzustellen, bei dem die Verwässerung der Produktion reduziert wird und der Entölungsgrad steigt, und welches auch unmittelbar im Anschluss an ein Dampffluten der Erdölformation ausgeführt werden kann.

Dem entsprechend wurde ein Verfahren zur Förderung von Erdöl aus unterirdischen Erdöllagerstätten, in welche mindestens eine Injektionsbohrung und mindestens eine Produktionsbohrung abgeteuft sind gefunden, wobei das Verfahren mindestens die folgenden Verfahrensschritte umfasst:
(1) Injizieren von Dampf in mindestens eine Injektionsbohrung und Entnahme von Erdöl durch mindestens eine Produktionsbohrung, wobei die Temperatur an der Injektionsbohrung nach Verfahrensschritt (1) 90°C bis 320°C beträgt, sowie
(2) Blockieren hoch permeabler Zonen der Erdöllagerstätte im Bereich zwischen der mindestens einen Injektionsbohrung und der mindestens einen Produktionsbohrung durch Injizieren von wässrigen Formulierungen durch die mindestens eine Injektionsbohrung, wobei die Formulierungen Wasser sowie chemische Komponenten enthalten, die nach dem Einpressen in die Lagerstätte unter dem Einfluss der Lagerstättentemperatur Gele bilden können,
(3) Fortsetzen der Förderung von Erdöl durch mindestens eine Produktionsbohrung, und wobei man Verfahrensschritt (2) ausführt, indem man mindestens
   - eine saure Formulierung F1, welche mindestens Wasser sowie ein wasserlösliches Aluminium(III)salz ausgewählt aus der Gruppe bestehend aus Aluminumchlorid, Aluminiumbromid, Auminiumnitrat, Aluminiumsulfat, Aluminiumacetat und Aluminiumacetylacetonat und/oder ein teilhydrolysiertes Aluminium(III)salz umfasst, wobei deren Menge 3 bis 30 Gew.-% (bezogen auf wasserfreie Aluminiumverbindungen) bezüglich der Summe aller Komponenten der Formulierung beträgt, sowie
   - eine Formulierung F2, welche mindestens Wasser sowie mindestens einen wasserlöslichen Aktivator umfasst, welcher beim Erwärmen auf eine Temperatur > 50°C eine Erhöhung des pH-Wertes bewirkt umfasst, wobei es sich bei dem Aktivator um Harnstoff handelt und wobei die Mengen des wasserlöslichen Aktivators 3 bis 60 Gew.-% bezüglich der Summe aller Komponenten beträgt,
jeweils separat in die Lagerstätte injiziert, mit der Maßgabe, dass die Temperaturen der Formulierungen F1 und F2 vor dem Injizieren weniger als 40 °C beträgt, wobei sich die Formulierungen nach dem Injizieren in der Formation miteinander vermischen und nach dem Erwärmen unter dem Einfluss der Lagerstätte viskose Gele bilden.

In einer bevorzugten Ausführungsform werden 3 Portionen der Formulierung nacheinander injiziert, und zwar in der Reihenfolge F1 - F2 - F1 oder F2 - F1 - F2.
Das erfindungsgemäße Verfahren hat den Vorteil, dass man auch in Lagerstätten mit hoher Temperatur hochpermeable Zonen gezielt mittels geeigneter Gele blockieren kann. Das Verfahren ermöglicht, direkt nach dem Dampffluten die Profilmodifikation im heißen Träger durchzuführen. Damit ist der Abstand zwischen dem Bohrloch und der Gelbank regelbar. Hierdurch wird eine effiziente Blockierung hochpermeabler Zonen erreicht, die Verwässerung der Produktion verringert und der Entölungsgrad erhöht.

### Verzeichnis der Abbildungen:

| | |
|---|---|
| Abb.1 | Schematische Darstellung des Temperaturverlaufs in einer Öllagerstätte nach länger andauerndem Dampffluten |
| Abb. 2 | Darstellung des Druckverlaufes eines Kernflutversuchs unter Verwendung von Formulierungen F1 und F2 |
| Abb. 3 | Schematische Darstellung des Vermischens zweier Formulierungen F1 und F2. |
| Abb.4 bis Abb. 7 | Schematische Darstellung des Vermischens dreier nacheinander injizierter Portionen F1, F2 und F1. |

Zu der Erfindung ist im Einzelnen das Folgende auszuführen:
Bei dem erfindungsgemäßen Verfahren zur Förderung von Erdöl handelt es sich um ein Verfahren zur sekundären oder tertiären Erdölförderung, d.h. es wird angewandt nachdem die primäre Erdölförderung aufgrund des Eigendrucks der Lagerstätte zum Erliegen gekommen ist und man den Druck in der Lagerstätte durch Einpressen von Wasser und/oder Dampf aufrecht erhalten muss.

### Lagerstätten

Bei den Lagerstätten kann es sich um Lagerstätten für alle Sorten von Öl handeln, beispielsweise um solche für leichtes oder für schweres Öl. In einer Ausführungsform der Erfindung handelt es sich bei den Lagerstätten um Schweröllagerstätten, d.h. Lagerstätten, welche Erdöl mit einem API-Grad von weniger als 22,3° API enthalten.

Zur Ausführung des Verfahrens werden in den Erdöllagerstätten mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen.

Die anfängliche Lagerstättentemperatur -d.h. die Temperatur vor Anwendung des erfindungsgemäßen Verfahrens- liegt üblicherweise im Bereich von 25°C bis 150°C, bevorzugt 30°C bis 140°C, besonders bevorzugt 35°C bis 130°C, ganz besonders bevorzugt bei 40°C bis 120°C und beispielsweise bei 50 bis 110°C. Die Lagerstättentemperatur ändert sich durch die Anwendung des erfindungsgemäßen Verfahrens zumindest im Bereich zwischen den Injektionsbohrungen und den Produktionsbohrungen.

### Verfahren

Erfindungsgemäß umfasst das Verfahren mindestens drei Verfahrensschritte (1), (2) und (3) welche in dieser Reihenfolge, aber nicht zwingend unmittelbar nacheinander ausgeführt werden. Das Verfahren kann selbstverständlich noch weitere Verfahrensschritte umfassen, die vor, während oder nach den Schritten (1), (2) und (3) ausgeführt werden können.

### Verfahrensschritt (1)

In einem ersten Verfahrenschritt (1) wird Dampf in die mindestens eine Injektionsbohrung injiziert und Erdöl durch mindestens eine Produktionsbohrung entnommen. Mit dem Begriff "Erdöl" ist in diesem Zusammenhang selbstverständlich nicht phasenreines Öl gemeint, sondern gemeint sind die üblichen, Öl und Formationswasser umfassenden Emulsionen, welche aus Erdöllagerstätten gefördert werden. Der injizierte Dampf hat in der Regel eine Temperatur von bis zu 320°C, insbesondere 250°C bis 320°C und bevorzugt 280°C bis 320°C.

Durch die Injektion von Dampf bildet sich im Bereich zwischen der Injektions- und der Förderbohrung eine Zone aus, in der Öl durch Dampf bzw. Wasser (Formationswasser oder durch Kondensation von Dampf gebildetes Wasser) verdrängt wird.

Durch die Injektion von Dampf erhöht sich die Temperatur an der Injektionsbohrung, und sie beträgt am Ende von Verfahrensschritt (1) 90°C bis 320°C. Insbesondere beträgt die Temperatur an der bzw. den Injektionsbohrung(en) nach Verfahrensschritt (1) 120°C bis 320°C, bevorzugt 150°C bis 300°C, besonders bevorzugt 180°C bis 300°C und beispielsweise 250 bis 300°C.

Durch die Injektion bildet sich weiterhin eine heiße Zone um die Injektionsbohrung herum aus. Die heiße Zone kann einen Radius von ca. 5 m bis zu ca. 50 m um die Injektionsbohrung herum abhängig von der Flutzeit, Flutvolumen und Temperatur des Dampfes aufweisen. Sofern mehrere Injektionsbohrungen vorhanden sind und durch jede der Injektionsbohrungen Dampf injiziert wird, bildet sich eine solche heiße Zone um jede der Injektionsbohrungen herum.

Durch das Strömen von Dampf bzw. Kondenswasser oder erwärmtes Formationswasser von den Injektionsbohrungen aus in Richtung der Produktionsbohrungen kann sich der gesamte Bereich zwischen der mindestens einen Injektionsbohrung und der mindestens einen Produktionsbohrung auf Temperaturen oberhalb der natürlichen Lagerstättentemperatur erwärmen, wobei die Erwärmung naturgemäß mit zunehmender Entfernung von der oder den Injektionsbohrungen(en) abnimmt.

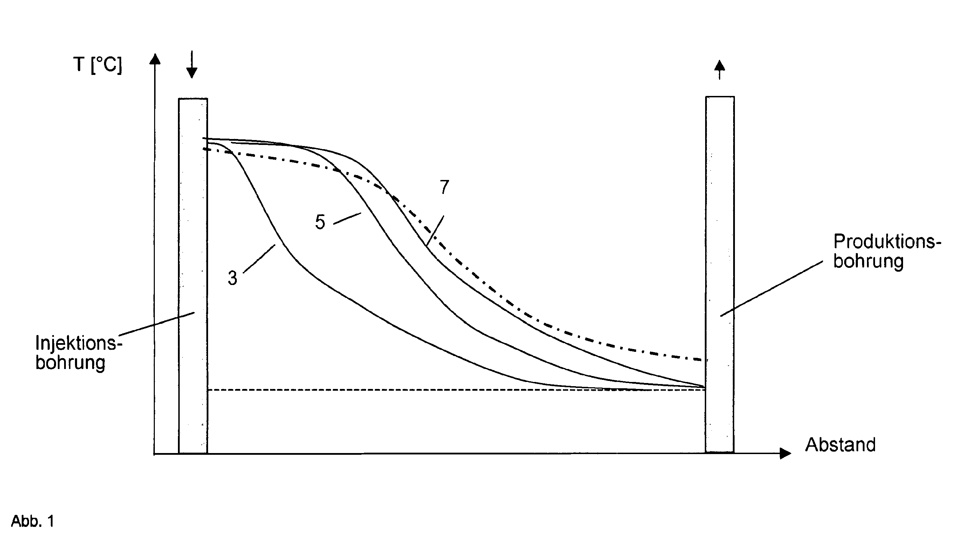

Dieser Sachverhalt ist schematisch und exemplarisch in Abbildung 1 dargestellt. Abbildung 1 zeigt schematisch einen Abschnitt einer Erdöllagerstätte, welche einen Dampfinjektor sowie eine, sich in einem in einem gewissen Abstand davon befindliche Produktionsbohrung aufweist. Die ursprüngliche Lagerstättentemperatur beträgt T₀. Durch das Injizieren von heißem Dampf erhöht sich die Lagerstättentemperatur von der Injektionsbohrung ausgehend mit zunehmender Zeit immer stärker. Abbildung 1 zeigt die Temperaturverläufe nach 3, 5 und 7 Jahren Dampfinjektion sowie beim Durchbruch des Dampfes (Kurve D) von der Injektions- zur Produktionsbohrung.

Die Obergrenze der Temperatur in der heißen Zone entspricht der Obergrenze der Temperatur an der Injektionsbohrung. Sie kann aber je nach Dauer der Dampfinjektion mit zunehmendem Abstand von der Injektionsbohrung darunter liegen.

### Verfahrensschritt (2)

Verfahrensschritt (2) kann angewandt werden, sobald die Produktion zu stark verwässert wird oder ein sogenannter Dampfdurchbruch registriert wird. Bei einem Dampfdurchbruch strömt Dampf durch hochpermeable Zonen von der Injektionsbohrung bis zur Produktionsbohrung. Hoch permeable Zonen müssen aber nicht zwingend durch das Dampffluten erzeugt werden, sondern können auch natürlicherweise in einer Formation vorhanden sein. Weiterhin ist es möglich, dass permeable Zonen bereits in einem dem erfindungsgemäßen Verfahren vorausgehenden Verfahrensschritt geschaffen wurden.

Zur Vorbereitung von Verfahrensschritt (2) ist es vorteilhaft, die Temperatur im Bereich der Injektionsbohrung gemessen und das Temperaturfeld der Lagerstätte im Bereich, der unter Einfluss des Flutens steht, zu bestimmen. Methoden zur Ermittlung des Temperaturfeldes einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen vorgenommen, wobei man bei den Simulationsrechnungen unter anderem in die Formation eingebrachte Wärmemengen sowie die aus der Formation abgeführten Wärmemengen berücksichtigt. Alternativ kann jeder der Bereiche auch durch seine Durchschnittstemperatur charakterisiert werden. Für den Fachmann ist klar, dass die geschilderte Analyse der Temperaturfeldes nur eine Annäherung der tatsächlichen Verhältnisse in der Formation darstellt.

Der Verfahrensschritt (2) kann unmittelbar nach Verfahrensschritt (1) durchgeführt werden. Vor dem Ausführen von Verfahrensschritt (2) kann man aber optional die Temperatur im Bereich der Injektionsbohrung absenken, um die störungsfreie Durchführung von Verfahrensschritt (2) zu erleichtern. Dies kann durch einfaches Warten erfolgen. In einer weiteren Ausführungsform der Erfindung kann man optional kaltes Wasser in die Injektionsbohrung verpressen, und somit die Temperatur im Bereich der Injektionsbohrung und in der Bohrnahzone reduzieren.

Im Zuge von Verfahrensschritt (2) werden hoch permeabler Zonen der Erdöllagerstätte im Bereich zwischen den Injektionsbohrungen und den Produktionsbohrungen durch Injizieren von wässrigen Formulierungen durch die mindestens eine Injektionsbohrung blockiert.

Erfindungsgemäß werden hierzu mindestens zwei unterschiedliche wässrige Formulierungen F1 und F2 verwendet. Die Formulierung F1 umfasst mindestens Wasser sowie eine oder mehrere wasserlösliche Aluminium(III)salze ausgewählt aus der Gruppe bestehend aus Aluminiumchlorid, Aluminimbromid, Aluminiumnitrat, Aluminiumsulfat, Aluminiumacetat und Aluminiumacetylacetonat, wobei deren Menge 3 bis 30 Gew.-% (bezogen auf wasserfreie Aluminiumverbindungen) bezüglich der Summe aller Komponenten der Formulierung beträgt, und/oder ein teilhydrolysiertes Aluminium(III)salze, und die davon verschiedene Formulierung F2 umfasst mindestens Wasser sowie eine oder mehrere wasserlösliche Aktivatoren, welche beim Erwärmen auf eine Temperatur > 50°C eine Erhöhung des pH-Wertes bewirken, wobei es sich bei dem Aktivator um Harnstoff handelt und wobei die Mengen des wasserlöslichen Aktivators 3 bis 60 Gew.-% bezüglich der Summe aller Komponenten beträgt. Durch die Erhöhung des pH-Wertes fallen schwerlösliche Aluminium-verbindungen aus.
Zur Ausführung des Verfahrens werden die mindestens zwei Formulierungen F1 und F2 jeweils separat durch eine oder mehrere Injektionsbohrungen in die Lagerstätte injiziert. Es handelt sich dabei um dieselben Injektionsbohrungen, welche in Verfahrensschritt (1) zur Injektion von Dampf verwendet wurden.

Das Injizieren wird dabei so vorgenommen, dass sich die beiden Formulierungen nach dem Injizieren in der Formation vermischen.

### Formulierungen F1 und F2

Erfindungsgemäß sind die Formulierungen F1 und F2 hinsichtlich ihrer chemischen Komponenten so zusammengesetzt, dass sie nach dem Vermischen untertage unter dem Einfluss der Lagerstätte nach dem Erwärmen auf eine Mindesttemperatur T > 50°C viskose Gele bilden, während die separaten, unvermischten Formulierungen F1 und F2 auch unter dem Einfluss der Lagerstättentemperatur keine Gele bilden können. Die gebildeten, viskosen Gele verstopfen Hohlräume in der Erdölformation und blockieren somit Fließwege für Wasser und/oder Dampf.

Erfindungsgemäß handelt es sich
- bei der Formulierung F1 um eine saure, wässrige Formulierung, welche mindestens Wasser sowie ein wasserlösliches Aluminium(III)salz ausgewählt aus der Gruppe bestehend aus Aluminiumchlorid, Aluminimbromid, Aluminiumnitrat, Aluminiumsulfat, Aluminiumacetat und Aluminiumacetylacetonat und/oder ein teilhydrolysiertes Aluminium(III)salz umfasst, wobei deren Menge 3 bis 30 Gew.-% (bezogen auf wasserfreie Aluminiumverbindungen) bezüglich der Summe aller Komponenten der Formulierung beträgt, und
- bei der Formulierung F2 um eine wässrige Formulierung, welche mindestens Wasser sowie einen wasserlöslichen Aktivator umfasst, welcher beim Erwärmen auf eine Temperatur > 50°C eine Erhöhung des pH-Wertes bewirkt, wobei es sich bei dem Aktivator um Harnstoff handelt und wobei die Mengen des wasserlöslichen Aktivators 3 bis 60 Gew.-% bezüglich der Summe aller Komponenten beträgt.

Neben Wasser können die Formulierungen optional noch weitere, mit Wasser mischbare organische Lösemittel umfassen. Beispiele derartiger Lösemittel umfassen Alkohole. In der Regel sollten die Formulierungen (F) aber mindestens 80 Gew. % Wasser bezüglich der Summe aller Lösemittel der Formulierung umfassen, bevorzugt mindestens 90 Gew. % und besonders bevorzugt mindestens 95 Gew. %. Ganz besonders bevorzugt sollte nur Wasser anwesend sein.

Bei den wasserlöslichen Aluminium(III)salzen, kann es sich bevorzugt um Aluminium(III)chlorid oder Aluminium(III)nitrat handeln. Es kann sich aber auch um bereits teilweise hydrolysierte Aluminium(III)salze handeln, wie beispielsweise Aluminiumhydroxychlorid. Selbstverständlich können auch Gemische mehrerer verschiedener Aluminiumverbindungen eingesetzt werden. Der pH-Wert der Formulierung F1 ist ≤5, bevorzugt ≤ 4,5 und besonders bevorzugt ≤ 4. In Wasser gelöste Aluminum(III)salze bilden beim Versetzen mit Basen schwerlösliche wasserhaltige Gele.

Die wasserlöslichen Aktivatoren in der Formulierung F2 setzen beim Erwärmen auf eine Temperatur > 50°C in wässrigem Medium Basen frei und sorgen somit für eine Erhöhung des pH-Wertes der Lösung. Als wasserlöslicher Aktivator wird Harnstoff eingesetzt. Harnstoff hydrolysiert in wässrigem Medium zu Ammoniak bzw. Aminen und CO₂. Die Geschwindigkeit der Hydrolyse ist naturgemäß temperaturabhängig und verläuft mit zunehmender Temperatur immer schneller. Die Formulierungen können neben Harnstoff selbstverständlich noch weitere wasserlösliche Aktivatoren umfassen.

Die Formulierungen F1 oder F2 können darüber hinaus noch weitere Komponenten umfassen, welche die Gelbildung beschleunigen oder verlangsamen können. Beispiele umfassen weitere Salze oder Naphthensäuren. Weiterhin können die Formulierungen F1 oder F2 auch verdickende Additive umfassen, beispielsweise verdickend wirkende Polymere.

Nach dem Vermischen der Formulierungen F1 und F2 und der Erwärmung auf Temperaturen > 50°C bilden sich durch die Erhöhung des pH-Wertes hochviskose, wasserunlösliche Gele, welche Metallionen, Hydroxid-Ionen sowie ggf. noch weitere Komponenten umfassen. Im Falle der Verwendung von Aluminiumverbindungen kann sich ein Aluminiumhydroxid bzw. - oxidhydratgel bilden, welche selbstverständlich noch weitere Komponenten, wie beispielsweise die Anionen des eingesetzten Aluminiumsalzes umfassen können.

In der bevorzugten Variante hat es sich bewährt, in Formulierung F1 die Aluminium(III)salze bzw. die teilhydrolysierten Aluminium(III)salze in einer Menge von 5 bis 25 Gew. % bezüglich der Summe aller Komponenten der Formulierung einzusetzen, wobei sich diese Angabe auf wasserfreie Metallverbindungen bezieht.

Ebenso hat es sich bewährt, in Formulierung F2 den wasserlöslichen Aktivatoren in einer Menge von 3 bis 60 Gew. %, bevorzugt 10 bis 45 Gew. % bezüglich der Summe aller Komponenten einzusetzen.

Die Konzentration des Aktivators sollte daher so bemessen werden, dass sich eine ausreichende Menge Base bilden kann, um den pH-Wert so weit abzusenken, dass tatsächlich ein Gel ausfallen kann. Im Falle von Aluminium(III)salzen sollte die Menge des Aktivators zumindest so bemessen werden, dass 3 mol Base pro mol Al(III) freigesetzt werden. Bei teilhydrolysierten Al(III)salzen kann je nach Hydrolysegrad auch weniger ausreichend sein.

Über die Konzentration der Komponenten lässt sich prinzipiell auch die Zeit bis zur Gelbildung nach dem Vermischen bestimmen, wobei allerdings zu berücksichtigen ist, dass die Vermischung der Formulierungen F1 und F2 in der Formation nicht vollständig sein muss, und dass dementsprechend eine gewisse Ungenauigkeit bei der Einstellung von Gelbildungszeiten bestehen bleibt. Je höher die Konzentration des Aktivators, desto größer ist -bei gegebener Konzentration der Metallverbindung- die Geschwindigkeit der Gelbildung. Diesen Zusammenhang kann der Fachmann nutzen, um die Gelbildungszeit gezielt zu verlängern oder zu verkürzen.

In der nachfolgenden Tabelle 1 ist exemplarisch für verschiedene Temperaturen die Zeit bis zur Gelbildung einer gelbildenden Formulierung zusammengestellt, wobei die Formulierung durch Vermischen zweier Formulierungen F1 und F2 erhalten wurde. F1 enthält 16 Gew. % AlCl₃ (gerechnet als wasserfreies Aluminiumchlorid) und 84 Gew. % Wasser, und F2 enthält 50 Gew. % Harnstoff und 50 Gew. % Wasser. Die Mischung enthält dem entsprechend 8 Gew. % AlCl₃, 25 Gew. % Harnstoff sowie 67 Gew. % Wasser.

**Tabelle 1: Zeit bis zur Gelbildung bei verschiedenen Temperaturen**

| | | | | | |
|---|---|---|---|---|---|
| Temperatur [°C] | 100 | 90 | 80 | 70 | 60 |
| Zeit der Gelbildung [Tage] | 1/4 | 1 | 3 | 6 | 30 |

In der nachfolgenden Tabelle 2 ist die Zeit bis zur Gelbildung für verschiedene Mischungen aus AlCl₃ (gerechnet als wasserfreies Produkt), Harnstoff und Wasser bei 100°C bzw. 100°C dargestellt. Man sieht, dass mit abnehmender Menge der Aktivators Harnstoff die Zeit zur Bildung des Gels immer länger wird.

**Tabelle 2: Zeit bis zur Gelbildung ("-" keine Messung). Gew. % bezieht sich auf die Summe aller Komponenten der wässrigen Formulierungen F1 und F2 bzw. deren Mischung.**

| F1 AlCl₃ [Gew. %] | F2 Harnstoff [Gew. %] | Konzentration der Mischung [Gew. %] | | Gewichtsverhältnis AlCl₃/ Harnstoff | Zeit bis zur Gelbildung [h] | |
|---|---|---|---|---|---|---|
| | | AlCl₃ | Harnstoff | | 100°C | 110°C |
| 8 | 32 | 4 | 16 | 1:4 | 4.0 | - |
| 8 | 24 | 4 | 12 | 1:3 | 4.3 | - |
| 8 | 16 | 4 | 8 | 1:2 | 7.3 | - |
| 8 | 8 | 4 | 4 | 1:1 | 19.0 | - |
| 16 | 60 | 8 | 30 | 1:3,75 | 5.3 | 2 |
| 4 | 15 | 2 | 7,5 | 1:3,75 | - | 8 |
| 16 | 48 | 8 | 24 | 1:3 | 5.5 | - |
| 16 | 32 | 8 | 16 | 1:2 | 8.3 | - |
| 16 | 16 | 8 | 8 | 1:1 | 18.0 | - |
| 16 | 12 | 8 | 6 | 1: 0,75 | 23.0 | - |

Die genannten Gele auf Basis von Aluminiumsalzen und Harnstoff lassen sich auch bei höheren Temperaturen einsetzen. L. K. Altunina und V. A. Kuvshinov in Oil & Gas Science and Technology - Rev. IFP, Vol. 63 (2008) (1), Seiten 37 bis 48 präsentieren in Figur 2, Seite 39 Messwerte für eine gelbildende Formulierung als Aluminiumsalzen und Harnstoff bei höheren Temperaturen. Bei 150°C setzt die Gelbildung nach 40 min ein, bei 200°C nach 20 min und bei 250°C nach 10 min ein.

US 7,273,101 B2 offenbart die Verwendung von Mischungen aus teilhydrolysiertem Aluminiumchlorid, beispielsweise von Al₂(OH)₂CL * 2,5 H₂O und Harnstoff bzw. Harnstoff-Derivaten wie bspw. Dimethylharnstoff, zum Bilden von Gelen. Die Mischungen können zusätzlich anorganische Partikel, insbesondere feinteiliges SiO₂ bzw. mit Aluminiumverbindungen beschichtetes SiO₂ umfassen. Die Schrift führt aus, dass sich die Zeit zum Gelieren im Temperaturbereich von 45 bis 140°C auf 12 bis 96 h einstellen lässt.

Die beschriebenen Formulierungen aus Aluminiumsalzen und Aktivatoren haben den Vorteil, dass anorganische Gele gebildet werden. Die Gele sind bis zu Temperaturen von 300°C stabil und eignen sich daher ganz besonders für Lagerstätten mit sehr hohen Temperaturen wie die vorliegenden heißen Lagerstätten nach Dampffluten. Weiterhin können die anorganischen Gele bei Bedarf auch wieder sehr leicht aus der Formation entfernt werden, indem man eine Säure in die Formation injiziert und die Gele löst.

### Durchführung von Verfahrensschritt (2)

Erfindungsgemäß werden die mindestens zwei Formulierungen F1 und F2 jeweils separat durch eine oder mehrere Injektionsbohrungen in die Lagerstätte injiziert, mit der Maßgabe, dass die Temperaturen der Formulierungen F1 und F2 vor dem Injizieren weniger als 40 °C beträgt, und die Formulierungen vermischen sich erst untertage. Nach dem Injizieren der Formulierungen F1 und F2 wird in der Regel noch mit Wasser nachgeflutet.

Hierbei sollten sich die Formulierungen erst nach dem Durchfließen der ersten heißen Zone um die Injektionsbohrung herum miteinander vermischen, damit sie die hoch permeablen Zonen in der Erdölformation tatsächlich erreichen und nicht verfrüht Gele bilden.

Um dies zu erreichen empfiehlt es sich, durch bekannte technische Maßnahmen den Skinfaktor der Bohrung zu reduzieren und das Verpumpen der Formulierungen F1 und F2 mit maximalen Injektionsraten und mit maximalem Druck durchzuführen. Hierdurch wird ein schnelles Durchfließen der heißesten Zone unmittelbar um die Injektionsbohrung herum erreicht.

Vorteilhaft kann weiterhin wie bereits oben beschrieben, die Formation in der Bohrnahzone vor dem Injizieren der Formulierungen F1 und F2 etwas abgekühlt werden, beispielsweise durch Wasserfluten. Außerdem ist es empfehlenswert, als Anmischwasser für die Formulierungen F1 und F2 sowie für ein optional auszuführendes Wasserfluten Wasser mit niedriger Temperatur, insbesondere Wasser mit einer Temperatur von weniger als 20°C zu verwenden. Die injizierten Formulierungen F1 bzw. F2 sollten vor dem Injizieren, d.h. vor dem Eintritt in das Bohrloch eine Temperatur von weniger als 40°C, bevorzugt weniger als 20°C, besonders bevorzugt weniger als 10°C und besonders bevorzugt eine Temperatur von nicht mehr als 5°C oberhalb des Gefrierpunktes der Lösung aufweisen.

In einer weiteren Ausführungsform injiziert man zwischen einer Injektion der Formulierungen F1 und F2 bzw. F2 und F1 eine Portion Wasser. Das injizierte Volumen an Wasser sollte hierbei nicht größer, bevorzugt kleiner sein, als das Volumen der nachfolgend injizierten Portion F1 oder F2. Das Volumen einer derartigen Portion Wasser kann insbesondere 40% bis 100% der nachfolgend injizierten Portion betragen, bevorzugt 40 bis 80% und besonders bevorzugt 40 bis 60%.
In einer weiteren bevorzugten Ausführungsform injiziert man zunächst eine Formulierung F2, insbesondere eine Harnstoff-enthaltende Formulierung, und danach mindestens eine Formulierung F1. Bei der beginnenden Hydrolyse von Harnstoff zu CO₂ und NH₃ bilden sich Gasbläschen, welche die Viskosität der Formulierung erhöhen. Das erleichtert das Vermischen mit der nachfolgenden Formulierung F1.

Die Formulierung F2 kann bei dieser Ausführungsform ein viskositätssteigendes Additiv umfassen, beispielsweise ein wasserlösliches, verdickend wirkendes Polymer und zwar in einer solchen Menge, dass die Viskosität der Formulierung F2 unter Lagerstättenbedingungen etwas größer ist als die der danach injizierten Formulierung F1. Beispiele derartiger Polymere umfassen Polyacrylamid, Mikrogele auf Basis von Polyacrylamid oder Biopolymere. Durch die leicht höhere Viskosität ist die Fließgeschwindigkeit der ersten injizierten Portion der Formulierung F2 in der Formation etwas geringer als die der nachfolgend injizierten Formulierung F1. Die Formulierung F1 kann dementsprechend besonders gut in die fließende Front der Formulierung F2 eindringen und sich mit dieser vermischen. Im Regelfalle sollte die Viskosität der injizierten Formulierung F2 um nicht mehr als 30%, beispielsweise 10% bis 30% höher sein als die Viskosität der zuvor injizierten Formulierung F1.

Um eine möglichst gute Blockierung hochpermeabler Zonen in Erdölformationen zu erreichen, ist eine möglichst vollständige Vermischung der Formulierungen F1 und F2 in der Formation erforderlich. Eine vollständige Vermischung kann jedoch durch die Gelbildung selbst behindert werden, insbesondere bei höheren Temperaturen, wenn die Gelbildung bereits schnell erfolgt.

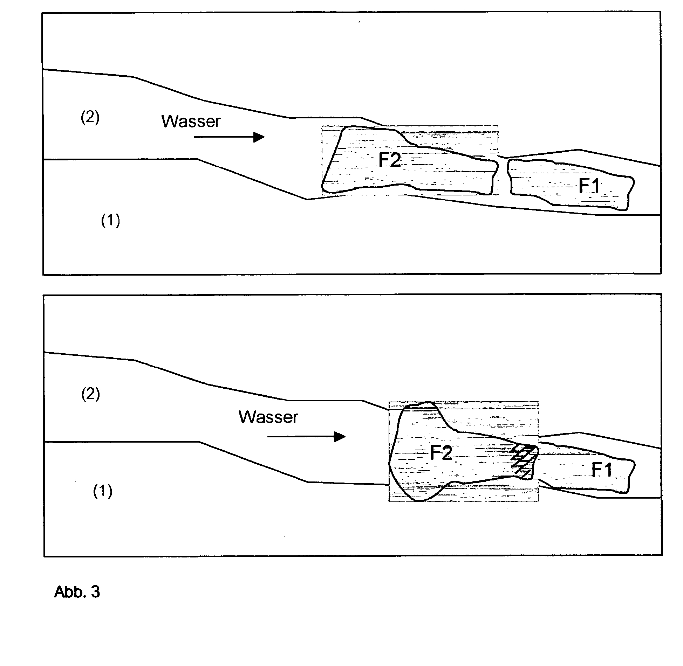

Dies ist exemplarisch in Abbildung 3 gezeigt. Abbildung 3 (oben) zeigt eine Formulierung F1 und eine danach injizierte Formulierung F2, die durch einen hochpermeablen Bereich (1) der Formation strömen. Der hoch permeable Bereich ist von einem niedrig permeablen -grau gezeichneten- Bereich (2) umgeben. Wenn die Formulierung F2 die Formulierung F1 erreicht hat, beginnt sich an der Grenzfläche ein Gel zu bilden (Abbildung 3 unten). Dieser Gelpfropf behindert zumindest die weitere Vermischung der Formulierungen F1 und F2. Ein größerer Teil der zunächst injizierten Formulierung verteilt sich ungenutzt weiter in der Formation.

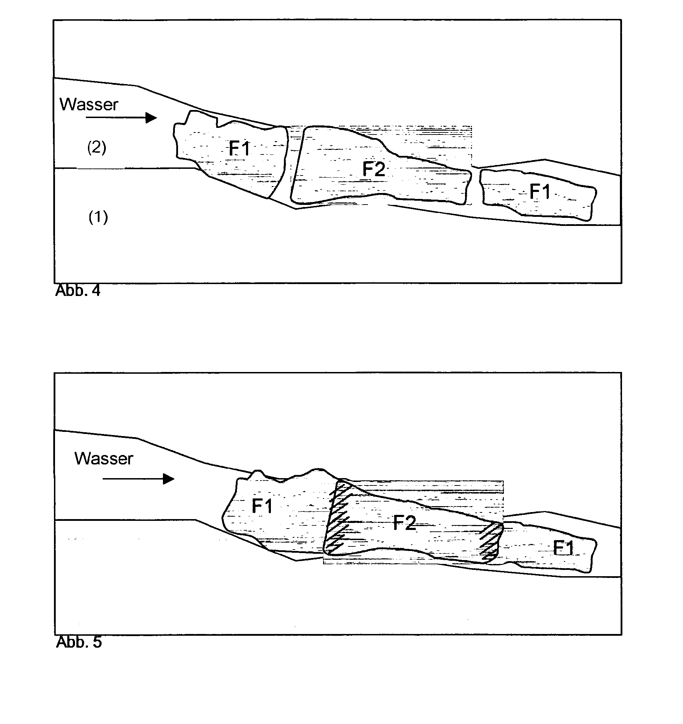

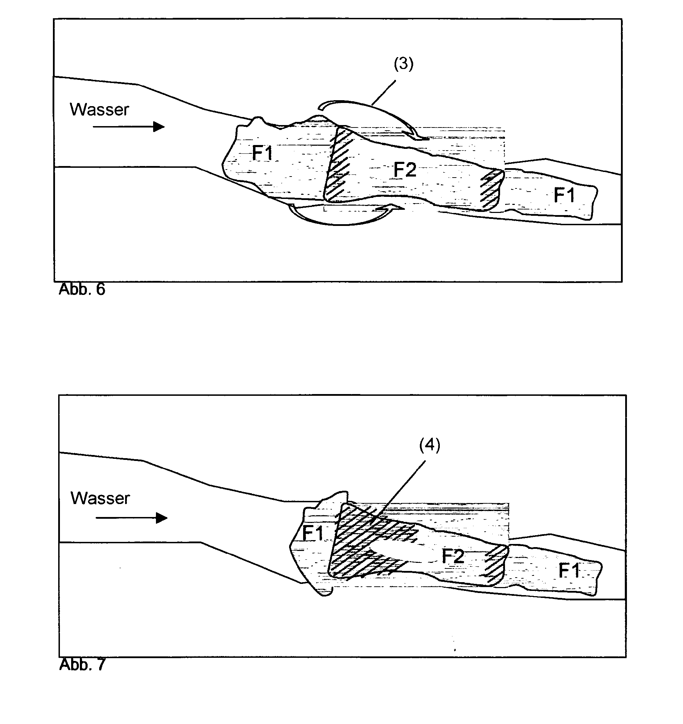

In einer weiteren bevorzugten Ausführungsform der Erfindung injiziert man daher 3 Portionen, und zwar entweder eine Portion Formulierung F2, eine Portion der Formulierung F1 sowie eine weitere Portion der Formulierung F2 oder eine Portion Formulierung F1, eine Portion der Formulierung F2 sowie eine weitere Portion der Formulierung F1.
Diese Ausführungsform und Ihre Vorteile sind exemplarisch in den Abbildungen 4, 5, 6 und 7 gezeigt. Abbildung 4 zeigt drei nacheinander injizierte Portionen F1, F2 und F1. Wenn die Formulierungen sich zu vermischen beginnen, beginnen sich an beiden Grenzflächen zwischen F1 und F2 Gelpfropfen zu bilden (Abbildung 5). Die Formulierung F2 wird zwischen 2 Gelpfropfen eingeschlossen und kann nicht mehr weiterfließen. Durch das nachdrückende Wasser wird die zweite Portion F1 auch in weniger permeable Bereiche umgelenkt und kann von dort wieder in den Bereich, in dem sich die Formulierung F2 befindet einströmen (Abbildung 6). Die Strömungsrichtung ist durch die Pfeile 3 angedeutet. Hierdurch bildet sich ein größerer Gelpfropf (4) (Abbildung 7). Das Gesagte gilt auch für die Injektion in der Reihenfolge F2, F1 und F2.

Die beschriebene, bevorzugte Ausführungsform kann prinzipiell bei jeder Formationstemperatur eingesetzt werden. Sie eignet sich aber besonders, wenn die Temperatur der Formation an der Stelle, an der sich die Formulierungen vermischen noch höher als 80°C, insbesondere höher als 100°C, insbesondere höher als 120°C ist. Die Temperatur kann beispielsweise im Bereich von 80°C bis 200°C, 100°C bis 200°C, 120°C bis 200°C, 80°C bis 150°C oder 100°C bis 150°C liegen.

Bevorzugt ist die Reihenfolge F2 - F1 - F2, d.h. man beginnt mit der Injektion des Harnstoffs. Das Auflösen von Harnstoff in Wasser ist endotherm, so dass Temperatur der Formulierung beim Lösen um 10 bis 15°C verringert. Man kann dann vorteilhaft eine kalte Lösung injizieren. Bevorzugt sollte die Temperatur der Formulierung F2 beim Injizieren weniger als 20°C, besonders bevorzugt weniger als 15°C und ganz besonders bevorzugt weniger als 10°C betragen.

In einer Variante dieser Ausführungsform werden 3 Portionen F1, F2, F1 oder F2, F1, F2 nacheinander verpresst, wobei die Viskosität der Formulierungen von der ersten zur dritten injizierten Formulierung zunimmt. Hierzu können viskositätssteigernde Additive ausgewählt aus der Gruppe bestehend aus Polyacrylamiden, Acrylamid umfassenden Copolymeren und Xanthanen verwendet werden. Die zunehmend höhere Viskosität bewirkt, dass sich die Formulierungen nicht vorschnell vermischen. Bei höheren Temperaturen verlieren übliche viskositätserhöhende Polymere ihre Wirkung. Sowie sich die Formulierungen also unter dem Einfluss der Formationstemperatur aufwärmen, gleicht sich deren Viskosität an, und die Formulierungen können sich auf die beschriebene Art miteinander vermischen.

### Verfahrensschritt (3)

Im Anschluss an Verfahrensschritt (2) wird die Ölförderung in Verfahrensschritt (3) durch mindestens eine Produktionsbohrung fortgesetzt. Dies kann sofort im Anschluss erfolgen, oder auch optional nach einer kurzen Pause, beispielsweise einer Pause von 1 bis 3 Tagen.

Bevorzugt kann die Ölförderung nach üblichen Methoden durch Einpressen eines Flutmediums durch mindestens eine Injektionsbohrung in die Erdöllagerstätte und Entnehmen von Rohöl durch mindestens eine Produktionsbohrung erfolgen. Bei dem Flutmedium kann es sich insbesondere um Kohlendioxid, Wasser und/oder Dampf, bevorzugt um Dampf handeln. Bei der mindestens einen Injektionsbohrung kann es sich um die bereits zum Injizieren der Formulierungen F1 und F2 verwendeten Injektionsbohrungen handeln oder auch um geeignet angeordnete andere Injektionsbohrungen.

Die Ölförderung kann aber selbstverständlich auch mittels anderer, dem Fachmann bekannter Methoden fortgesetzt werden. Beispielsweise kann man als Flutmedium auch viskose Lösungen von silikathaltigen Produkten oder verdickenden Polymeren einsetzten. Hierbei kann es sich um synthetische Polymere, wie beispielsweise Polyacrylamid oder Acrylamid umfassende Copolymere handeln. Weiterhin kann es sich auch um Biopolymere handeln, wie beispielsweise bestimmte Polysaccharide. Die Viskosität des wässrigen Flutmediums wird hierbei so eingestellt, dass sie höher ist als die der letzten injizierten Formulierung F1 oder F2.

Es ist selbstverständlich möglich, im Anschluss an Verfahrensschritt (3) nochmals die Verfahrensschritte (2) und (3) durchzuführen. Dies kann in regelmäßigen Abständen erfolgen, beispielsweise einmal pro Jahr oder -im Falle des Dampfflutens- sobald ein Dampfdurchbruch registriert wird.

### Vorteile

Das neue Verfahren zum Ölgewinnen hat folgende Vorteile im Vergleich zu bekannten Technologien:
- Es ist möglich, in dem Träger mit hoher Temperatur (90°-320°C) die Permeabilität der hochpermeablen Zonen zu reduzieren.
- Es ist möglich, operativ die hochpermeablen Kanäle im Träger beim Dampfdurchbruch zu blockieren mit kurzzeitlichem Unterbrechen des Dampfflutens.

Das neue Verfahren ist kostengünstig, braucht für die Realisierung keine neuen chemischen Produkte, basiert auf der Verwendung von konventionellen technischen Mittel und erlaubt eine effiziente Profilmodifikation in Trägern mit hoher Temperatur und sehr hoher Temperatur.

### Andere Verfahrensvarianten

Verfahrensschritt (2) muss nicht zwingend im Anschluss an Dampffluten ausgeführt werden. Die Vorteile des Verfahrens kommen auch zum Tragen, wenn die Temperatur an der Injektionsbohrung aufgrund natürlicher Faktoren größer als 90°C ist, beispielsweise 90°C bis 150°C, bevorzugt 100 bis 150°C beträgt. Aus derartigen Lagerstätten kann im Regelfalle mittels einfachen Wasserflutens gefördert werden. Weist die Lagerstätte darüber hinaus noch eine vergleichsweise niedrige Permeabilität auf, dann sind die Injektionsraten bei gegebenem Druck entsprechend gering. In diesem Fall ist das Verpumpen der konventionellen Thermogelen mit dem Risiko verbunden, dass die injizierten Formulierungen aufgrund der kleinen Fließgeschwindigkeit auch bei Temperaturen 100 bis 150°C direkt an den Injektionsbohrungen vergelen. Dies kann durch den erfindungsgsgemäßen Verfahrensschritt (2) vermieden werden, bei dem man mindestens zwei verschiedene Formulierungen F1 und F2 injiziert. Mögliche Ausführungsformen für Verfahrensschritt (2) wurden bereits beschrieben. Es ist bei dieser Ausführungsform regelmäßig empfehlenswert, im Anschluss an die Injektion der Portionen F1 und F2 eine Portion Wasser (Volumen ca. 2 bis 3 mal des Gesamtvolumens von F1 und F2 zusammen) zu injizieren.

In einer weiteren Verfahrensvariante kann man das erfindungsgemäße Verfahren auch bei zyklischer Bedampfung und Ölförderung (Huff & Puff Methode) einsetzen. Die Huff & Puff Methode beinhaltet drei technologischen Phasen (Dampffluten, Ruhepause, Ölförderung), die zyklisch nacheinander durchgeführt werden. In einer ersten Phase wird Dampf in die Lagerstätte verpresst. Wegen Inhomogenität der Lagerstätteeigenschaften verbreitet sich der Dampf ungleichmäßig im Träger und kann auch in die Nebengesteine fließen, wenn die Gesteinsklüftung ausgeprägt ist. Um das zu vermeiden und die Effizienz der Bedampfung zu steigern, wird die erste Phase nach dem Verpumpen von ca. 20 bis 50% des Dampfvolumens unterbrochen und Formulierungen F1 und F2 seriell in die heiße Bohrung verpumpt. Optional kann mit Wasser nachgeflutet werden. Danach wird das Dampffluten wieder aufgenommen und die restliche Menge von Dampf (50 bis 80 %) in die Lagerstätte verpresst.

Die Erfindung wird nachfolgend anhand der folgenden Ausführungsbeispiele näher erläutert:

### Laboruntersuchungen - Kemflutversuch

Das erfindungsgemäße Verfahren wurde mittels eines Modellversuchs getestet. Hierzu wurde loses Lagerstättenmaterial der ölführenden Schicht einer Erdöllagerstätte in Nordwestdeutschland in einem Rohr verpresst. Die Permeabilität des Materials betrug 1 bis 12 µm²[Darcy]. Das gefüllte Rohr wurde an den Enden mit Vorrichtungen zum Injizieren und Entnehmen von Flüssigkeiten versehen und mittels einer Heizung auf 200°C geheizt. Als erster Schritt wurde Süßwasser in die Schicht injiziert und am anderen Ende entnommen, und zwar in einer Menge des 3,9-fachens des Porenvolumens. Danach wurde eine Formulierung F2 injiziert (Lösung von 40 Gew. % Harnstoff in Wasser, Menge 0,2 mal Porenvolumen), danach eine Portion Wasser (0,1-faches Porenvolumen), danach eine Formulierung F1 (Gemisch aus 30 Gew. % einer wässrige Lösung von Polyaluminiumchlorid (Alₙ(OH)ₘCl₃ₙ₋ₘ, Al-Gehalt 9,15 Gew. %, pH < 1, ALUSTAR^{®} 1010 L (Fa. Applied Chemicals)) und 70 Gew. % Wasser, Menge 0,2 mal Porenvolumen), danach nochmals eine Portion Wasser (0,2-faches Porenvolumen) und nochmals eine Portion der Formulierung F2 (0,2 mal Porenvolumen). Nach 18 Stunden Ruhepause bei konstanter Temperatur 200°C wurde das Wasserfluten fortgesetzt.

Die Ergebnisse des Versuchs sind in Abbildung 2 dargestellt. Abbildung 2 zeigt das injizierte Volumen und Abhängigkeit davon das eluierte Volumen (Filtrationsrate) sowie den Druckgradienten. Während des Wasserflutens zu Beginn ist der Druckgradient zunächst gering. Er steigt erst stark von 7300 Pa/m [0,073 bar/m] auf 4 360 000 Pa/m [43,6 bar/m] bis 5390000 Pa/m [53,9 bar/m] nachdem die Formulierungen F1 und F2 jeweils vollständig injiziert sind. Gleichzeitig nimmt die Wasserproduktion deutlich ab.

### Anwendung der Verfahrens im Ölfeld

Ein Beispiel für eine mögliche Art der Verfahrensausführung ist nachfolgend dargestellt.
Es handelt sich um eine typische Lagerstätte mit viskosem Öl. Ein Abschnitt der Lagerstätte ist mit einer Injektionsbohrung und mehreren Produktionsbohrungen versehen, und wird bereits mehrere Monate mit Dampf geflutet. Die Dampftemperatur beträgt 280-320°C. Bei einigen Produktionsbohrungen, die mit der Injektionsbohrung kommunizieren, wird eine rasche Produktionsverwässerung registriert. Die Lagerstätte ist durch geologische Störungen zerklüftet und weist unhomogene Permeabilität auf. Um die Injektionsbohrung herum hat sich eine extrem heize Zone mit einer Temperatur von ca. 240 bis 250°C und einem Radius von ca. 10 m gebildet.

Das Dampffluten wird für eine gewisse Zeit eingestellt. Es werden zur Abkühlung und Spülung der Bohrung zunächst 100 bis 200 m³ Wasser mit einer Temperatur von 5°C verpumpt.

Um die Profilmodifikation durchzuführen und die hochpermeablen Zonen in der ölführenden Schicht zu blockieren, wird über Tage in einem Behälter eine erste Portion der Formulierung F2 (40 Gew. % Harnstoff in Wasser) vorbereitet. Es kann Süßwasser, Salzwasser oder Formationswasser verwendet werden. Unter Verwendung üblicher Ausrüstungen werden 50 m³ der Formulierung F2 in die Lagerstätte durch die Injektionsbohrung verpresst. Die erste Portion der Formulierung F2 hat eine niedrige Viskosität und fließt vorwiegend durch die hoch permeablen Bereiche der Lagerstätte.

Anschließend werden 50 m³ Wasser in die Lagerstätte verpresst. Durch das Verpressen der 50 m³ Wasser wird die erste Portion der Formulierung F2 mobilisiert und von der Injektionsbohrung aus in die Erdöllagerstätte gedrückt. Unter Wirkung der Lagerstättentemperatur, die durch Verpressen vom Wasser in den hoch permeablen "Kanälen" kurzfristig auf ca. 200°C gesunken ist, steigt auch die Temperatur der eingepressten Formulierung F2. Die Viskosität der Formulierung F2 steigt durch Bildung von Gasen (beginnende Zersetzung von Harnstoff) etwas an, aber es kommt nicht zur Gelbildung.

Nach dem Wasser werden 50 m³ einer Formulierung F1 (30 Gew. % Aluminium(III)chlorid oder Aluminium(III)nitrat) durch die Injektionsbohrung injiziert. Anschließend werden 50 m³ Wasser verpresst und unmittelbar danach abermals 50 m³ der oben genannten Formulierung F2 verpresst. Ohne Zeitunterbrechung wir der beschriebenen Zyklus dreimal wiederholt: (50 m3 Wasser) - (50 m3 F2) -(50 m3 Wasser) -(50m3 F1). Damit werden insgesamt 200 m³ von F2 und 200m³ von F1 verpumpt.

Durch diese Maßnahmen bilden sich mehrere Bänke von der Formulierung und von dem verdrängenden Wasser in der ölführenden Schicht.

Beim Verdrängen der Formulierungsbänke findet eine Retention (Adsorption) von Harnstoff und Metallsalz am Gestein und anderseits eine Verdünnung statt, was zu einer Konzentrationsreduktion der Wirkstoffe in der Bänken führt.

Durch den Einfluss der Lagerstättentemperatur beginnt außerdem die Hydrolyse des Harnstoffes zu Ammoniak und Kohlendioxid. Die gebildeten Gase lösen sich teilweise im Wasser auf und erhöhen den pH-Wert des Wassers, sie bilden darüber hinaus mit dem Wasser Gasemulsionen oder schaumartige Mikrostrukturen. Dies reduziert die Mobilität der ersten, im Wesentlichen von der Formulierung F2 gebildeten Bank. Die Mobilität der ersten Bank kann man auch durch Zufuhr von viskositätserhöhenden Additiven in die erste Portion der Formulierung F2 reduzieren.

Durch die Retention (Adsorption) von Harnstoff in der ölführenden Schicht sowie durch die verringerte Mobilität der Harnstoffwasserlösung holt die danach injizierte Portion der Formulierung F1 (wässrige Lösung des Metallsalzes) die erste Bank ein, d.h. kommt mit Wasser mit erhöhtem pH-Wert in Kontakt. Beim Vermischen der ersten und der zweiten Bank in der ölführenden Schicht entsteht in wenigen Minuten eine Gelbank in dem hochpermeablen Bereich der Lagerstätte. Die dritte Bank -wiederum aus Formulierung F2 (Harnstofflösung)- sorgt für die vollständige Nutzung des Metallsalzes, welches während des Verdrängens durch Retention in Gesteinporen geblieben ist. Die ausgewählte hohe Konzentration der Formulierungen garantiert bei auch mehrfacher Verdünnung der Formulierungen im Gesteinmassiv durch das Formationswasser und Flutwasser die Gelbildung. Das Verpressen und Verdrängen der dritten Bank reduziert die Permeabilität weiterer hochpermeabler Zonen, die zwischen der Gelbank und der Injektionsbohrung liegen.

Mittels der Volumina der injizierten Portionen der Formulierungen F1 und F2 sowie von Wasser kann man den Abstand zwischen der Injektionsbohrung und der Gelbank regeln.

Mit Beginn der Vergelung steigt auch der Injektionsdruck. Nach Beginn der Injektionsdrucksteigerung wird das Wasserfluten für ein bis zwei Tage eingestellt. Danach wird das Wasserfluten wieder aufgenommen oder es wird das Dampffluten fortgesetzt. Nach dem Blockieren hoch permeabler Bereiche bilden sich unter dem Einfluss des Flutmediums neue Flutwege in weiteren Bereichen der ölführenden Schicht, und somit wird weiteres Erdöl aus der Formation gefördert.

## Patentansprüche

1. Verfahren zur Förderung von Erdöl aus unterirdischen Erdöllagerstätten, in welche mindestens eine Injektionsbohrung und mindestens eine Produktionsbohrung abgeteuft sind, umfassend mindestens die folgenden Verfahrensschritte:
(1) Injizieren von Dampf in mindestens eine Injektionsbohrung und Entnahme von Erdöl durch mindestens eine Produktionsbohrung, wobei die Temperatur an der Injektionsbohrung nach Verfahrensschritt (1) 90°C bis 320°C beträgt, sowie
(2) Blockieren hoch permeabler Zonen der Erdöllagerstätte im Bereich zwischen der mindestens einen Injektionsbohrung und der mindestens einen Produktionsbohrung durch Injizieren von wässrigen Formulierungen durch mindestens Injektionsbohrung, wobei die Formulierungen Wasser sowie chemische Komponenten enthalten, die nach dem Einpressen in die Lagerstätte unter dem Einfluss der Lagerstättentemperatur Gele bilden können,
(3) Fortsetzen der Förderung von Erdöl durch mindestens eine Produktionsbohrung,
**dadurch gekennzeichnet, dass** man Verfahrensschritt (2) ausführt, indem man mindestens
• eine saure Formulierung F1, welche mindestens Wasser sowie ein wasserlösliches Aluminium(III)salz ausgewählt aus der Gruppe bestehend aus Aluminumchlorid, Aluminiumbromid, Aluminiumnitrat, Aluminiumsulfat, Aluminiumacetat und Aluminiumacetylacetonat und/oder ein teilhydrolysiertes Aluminium(III)salz umfasst, wobei deren Menge 3 bis 30 Gew.-% (bezogen auf wasserfreie Aluminiumverbindungen) bezüglich der Summe aller Komponenten der Formulierung beträgt, sowie
• eine Formulierung F2, welche mindestens Wasser sowie mindestens einen wasserlöslichen Aktivator umfasst, welcher beim Erwärmen auf eine Temperatur > 50°C eine Erhöhung des pH-Wertes bewirkt umfasst, wobei es sich bei dem Aktivator um Harnstoff handelt und wobei die Mengen des wasserlöslichen Aktivators 3 bis 60 Gew.-% bezüglich der Summe aller Komponenten beträgt,
jeweils separat nacheinander in die Lagerstätte injiziert, mit der Maßgabe, dass die Temperaturen der Formulierungen F1 und F2 vor dem Injizieren weniger als 40 °C beträgt, wobei sich die Formulierungen nach dem Injizieren in der Formation miteinander vermischen und nach dem Erwärmen unter dem Einfluss der Lagerstätte viskose Gele bilden.

2. Verfahren gemäß Anspruch 1, **dadurch gekennzeichnet, dass** es sich bei dem Aluminium(III)salz um Aluminiumchlorid oder Aluminiumnitrat handelt.

3. Verfahren gemäß Anspruch 1 oder 2, **dadurch gekennzeichnet, dass** die Konzentration der Aluminium(III)verbindungen in der Formulierung F1 5 bis 25 Gew. % beträgt, wobei sich diese Angabe auf wasserfreie Aluminium(III)verbindungen bezieht.

4. Verfahren gemäß einem der Ansprüche 1 bis 3, **dadurch gekennzeichnet, dass** die Konzentration der wasserlöslichen Aktivatoren in der Formulierung F2 10 bis 45 Gew. % beträgt.

5. Verfahren gemäß einem der Ansprüche 1 bis 4, **dadurch gekennzeichnet, dass** man nacheinander 3 Portionen injiziert, und zwar in der Reihenfolge F1 - F2 - F1 oder F2 - F1 - F2.

6. Verfahren gemäß Anspruch 5, **dadurch gekennzeichnet, dass** für die Viskosität ηder injizierten 3 Portionen von der ersten zur dritten Formulierung zunimmt, wobei die Viskosität mithilfe viskositätssteigernder Additive ausgewählt aus der Gruppe bestehend aus Polyacrylamiden, Acrylamid umfassenden Copolymeren und Xanthanen eingestellt wird.

7. Verfahren gemäß Anspruch 5 oder 6, **dadurch gekennzeichnet, dass** die Reihenfolge der Injektion F2 - F1 - F2 ist.

8. Verfahren gemäß Anspruch 6, **dadurch gekennzeichnet, dass** die Temperatur der ersten injizierten Formulierung F2 weniger als 20°C beträgt.

9. Verfahren gemäß einem der Ansprüche 1 bis 8, **dadurch gekennzeichnet, dass** man zwischen der Injektion der Formulierungen F1 und F2 eine Portion Wasser injiziert.

10. Verfahren gemäß einem der Ansprüche 1 bis 9, **dadurch gekennzeichnet, dass** man zwischen den Verfahrensschritten (1) und (2) eine Portion Wasser injiziert.

11. Verfahren gemäß einem der Ansprüche 1 bis 10, **dadurch gekennzeichnet, dass** man die Ölförderung in Verfahrensschritt (3) durch die Injektion von Dampf fortsetzt.

12. Verfahren gemäß einem der Ansprüche 1 bis 10, **dadurch gekennzeichnet, dass** man die Ölförderung in Verfahrensschritt (3) durch die Injektion einer wässrigen Lösung eines verdickend wirkenden Polymers fortsetzt.

13. Verfahren gemäß Anspruch 12, **dadurch gekennzeichnet, dass** die Viskosität η der injizierten Polymerlösung höher ist als die Viskosität der zuletzt injizierten Formulierung F1 oder F2.

## Claims

1. A process for producing mineral oil from underground mineral oil deposits into which at least one injection borehole and at least one production borehole have been sunk, comprising at least the following process steps:
(1) injection of steam into at least one injection borehole and withdrawal of mineral oil through at least one production borehole, the temperature at the injection borehole after process step (1) being 90°C to 320°C, and
(2) blocking of highly permeable zones in the mineral oil deposit in the region between the at least one injection borehole and the at least one production borehole by injecting aqueous formulations through at least one injection borehole, said formulations comprising water and chemical components which, after injection into the deposit, can form gels under the influence of the deposit temperature,
(3) continuing of the production of mineral oil through at least one production borehole,
which comprises performing process step (2) by injecting at least
• an acidic formulation F1 which comprises at least water and a water-soluble aluminum(III) salt selected from the group consisting of aluminum chloride, aluminum bromide, aluminum nitrate, aluminum sulfate, aluminum acetate and aluminum acetylacetonate and/or a partially hydrolyzed aluminum(III) salt, the amount thereof being 3 to 30% by weight (based on anhydrous aluminum compounds) with respect to the sum of all components of the formulation, and
• a formulation F2 which comprises at least water and at least one water-soluble activator which causes an increase in the pH when heated to a temperature of > 50°C, the activator being urea and the amount of the water-soluble activator being 3 to 60% by weight based on the sum of all components,
each separately into the deposit, with the proviso that the temperatures of formulations F1 and F2 prior to injection are less than 40°C, the formulations mixing with one another in the formation after injection, and forming viscous gels after heating under the influence of the deposit.

2. The process according to claim 1, wherein the aluminum(III) salt is aluminum chloride or aluminum nitrate.

3. The process according to claim 1 or 2, wherein the concentration of the aluminum(III) compounds in formulation F1 is 5 to 25% by weight, where this figure is based on anhydrous aluminum(III) compounds.

4. The process according to any of claims 1 to 3, wherein the concentration of water-soluble activators in formulation F2 is 10 to 45% by weight.

5. The process according to any of claims 1 to 4, wherein 3 portions are injected in succession, in the sequence F1 - F2 - F1 or F2 - F1 - F2.

6. The process according to claim 5, wherein the viscosity η of the 3 injected portions increases from the first to the third formulation, the viscosity being adjusted by means of viscosity-increasing additives selected from the group consisting of polyacrylamides, copolymers comprising acrylamide, and xanthans.

7. The process according to claim 5 or 6, wherein the sequence of injection is F2 - F1 - F2.

8. The process according to claim 6, wherein the temperature of the first injected formulation F2 is less than 20°C.

9. The process according to any of claims 1 to 8, wherein a portion of water is injected between the injection of formulations F1 and F2.

10. The process according to any of claims 1 to 9, wherein a portion of water is injected between process steps (1) and (2).

11. The process according to any of claims 1 to 10, wherein the oil production in process step (3) is continued by the injection of steam.

12. The process according to any of claims 1 to 10, wherein the oil production in process step (3) is continued by the injection of an aqueous solution of a thickening polymer.

13. The process according to claim 12, wherein the viscosity η of the injected polymer solution is higher than the viscosity of the last-injected formulation F1 or F2.

## Revendications

1. Procédé pour l'extraction de pétrole à partir de gisements pétrolifères souterrains, dans lequel ont été forés au moins un puits d'injection et au moins un puits de production, comprenant au moins les étapes suivantes de processus :
(1) injection de vapeur dans au moins un puits d'injection et extraction de pétrole par au moins un puits de production, la température au niveau du puits d'injection après l'étape (1) du processus valant de 90 °C à 320 °C, ainsi que
(2) blocage de zones hautement perméables du gisement pétrolifère dans la partie comprise entre ledit au moins un puits d'injection et ledit au moins un puits de production, par injection de compositions aqueuses par au moins un puits d'injection, les compositions contenant de l'eau ainsi que des composant chimiques qui après l'injection dans le gisement peuvent former des gels sous l'effet de la température du gisement,
(3) poursuite de l'extraction de pétrole par au moins un puits de production,
**caractérisé en ce qu'**on effectue l'étape (2) du procédé en injectant dans le gisement successivement chacune séparément au moins
• une composition acide F1, qui comprend au moins de l'eau ainsi qu'un sel d'aluminium(III) hydrosoluble choisi dans le groupe constitué par le chlorure d'aluminium, le bromure d'aluminium, le nitrate d'aluminium, le sulfate d'aluminium, l'acétate d'aluminium et l'acétylacétonate d'aluminium et/ou un sel d'aluminium(III) partiellement hydrolysé, dont la quantité vaut de 3 à 30 % en poids (sur la base des composés d'aluminium anhydres) par rapport à la somme de tous les composants de la composition, ainsi que
• une composition F2, qui comprend au moins de l'eau ainsi qu'au moins un activateur hydrosoluble, qui lors du chauffage jusqu'à une température de > 50 °C entraîne une élévation du pH, l'activateur consistant en urée et la quantité de l'activateur hydrosoluble valant de 3 à 60 % en poids par rapport à la somme de tous les composants,
étant entendu qu'avant l'injection les températures des compositions F1 et F2 sont inférieures à 40 °C, les compositions se mélangeant entre elles après l'injection dans la formation et formant des gels visqueux après le chauffage sous l'effet du gisement.

2. Procédé selon la revendication 1, **caractérisé en ce que** le sel d'aluminium(III) consiste en chlorure d'aluminium ou nitrate d'aluminium.

3. Procédé selon la revendication 1 ou 2, **caractérisé en ce que** dans la composition F1 la concentration des composés d'aluminium(III) vaut de 5 à 25 % en poids, cette donnée se rapportant aux composés d'aluminium(III) anhydres.

4. Procédé selon l'une quelconque des revendications 1 à 3, **caractérisé en ce que** dans la composition F2 la concentration des activateurs hydrosolubles vaut de 10 à 45 % en poids.

5. Procédé selon l'une quelconque des revendications 1 à 4, **caractérisé en ce qu'**on injecte successivement 3 portions, à savoir dans l'ordre F1 - F2 - F1 ou F2 - F1 - F2.

6. Procédé selon la revendication 5, **caractérisé en ce que** la viscosité η des 3 portions injectées augmente de la première à la troisième composition, la viscosité étant ajustée à l'aide d'additifs augmentant la viscosité, choisis dans le groupe constitué par des polyacrylamides, des copolymères comprenant de l'acrylamide et des xanthanes.

7. Procédé selon la revendication 5 ou 6, **caractérisé en ce que** l'ordre de l'injection est F2 - F1 - F2.

8. Procédé selon la revendication 6, **caractérisé en ce que** la température de la première composition F2 injectée est inférieure à 20 °C.

9. Procédé selon l'une quelconque des revendications 1 à 8, **caractérisé en ce qu'**entre l'injection des compositions F1 et F2 on injecte une portion d'eau.

10. Procédé selon l'une quelconque des revendications 1 à 9, **caractérisé en ce qu'**entre les étapes (1) et (2) du procédé on injecte une portion d'eau.

11. Procédé selon l'une quelconque des revendications 1 à 10, **caractérisé en ce que** l'extraction de pétrole se poursuit dans l'étape (3) du procédé par l'injection de vapeur.

12. Procédé selon l'une quelconque des revendications 1 à 10, **caractérisé en ce que** dans l'étape (3) du procédé on poursuit l'extraction de pétrole par l'injection d'une solution aqueuse d'un polymère à effet épaississant.

13. Procédé selon la revendication 12, **caractérisé en ce que** la viscosité η de la solution de polymère injectée est supérieure à la viscosité de la composition F1 ou F2 injectée en dernier.
